# EUROPÄISCHE PATENTSCHRIFT

(11) **EP 3 602 732 B1**
(45) Veröffentlichungstag und Bekanntmachung des Hinweises auf die Patenterteilung: **16.03.2022**
(21) Anmeldenummer: 18716909.9
(22) Anmeldetag: 21.03.2018
(51) Int. Cl.: H02J 9/06

(54) **VERFAHREN ZUM BETRIEB EINER ELEKTRISCHEN ANLAGE MIT EINER MEHRZAHL AN ELEKTRISCHEN VERBRAUCHERN, STROMVERSORGUNGSEINHEIT UND ELEKTRISCH BETRIEBENE ANLAGE**
METHOD FOR OPERATION OF AN ELECTRICAL INSTALLATION COMPRISING A PLURALITY OF ELECTRICAL CONSUMERS, POWER SUPPLY UNIT AND ELECTRICALLY OPERATED INSTALLATION
PROCÉDÉ DE FONCTIONNEMENT D'UNE INSTALLATION ÉLECTRIQUE COMPRENANT UNE PLURALITÉ DE CONSOMMATEURS ÉLECTRIQUES, ALIMENTATION ÉLECTRIQUE ET INSTALLATION ÉLECTRIQUE

(30) Priorität: 21.03.2017 EP 17162168
(43) Veröffentlichungstag der Anmeldung: 05.02.2020
(73) Patentinhaber: Siemens Aktiengesellschaft, 80333 München (DE)
(72) Erfinder: ALLAHUT, Gerd, 91171 Greding (DE)
(86) Internationale Anmeldenummer: PCT/EP2018/057128
(87) Internationale Veröffentlichungsnummer: WO 2018/172397

(56) Entgegenhaltungen:
- EP-A1- 2 787 405
- US-A- 5 894 415
- English: "APC Symmetra RM Installation Manual", , 30. April 2001 (2001-04-30), Seiten 1-64, XP055394964, Gefunden im Internet: URL:http://www.apc.com/salestools/ASTE-6Z6 K6C/ASTE-6Z6K6C_R0_EN.pdf [gefunden am 2017-08-01]
- Ap9630 ET AL: "User's Guide UPS Network Management Card 2", , 1. November 2009 (2009-11-01), XP055141606, Gefunden im Internet: URL:http://www.jlab.org/Hall-D/Documents/m anuals/APC stuff/AP9630 9631 UPS Network Management Card 2 User's Guide firmware V5.1.1.pdf [gefunden am 2014-09-19]
- Schneider Electric: "User Guide PowerChute(TM) Network Shutdown v4.2", , 31. Juli 2016 (2016-07-31), Seiten 1-71, XP055395072, Gefunden im Internet: URL:http://www.apc.com/salestools/PMAR-9E5 LVY/PMAR-9E5LVY_R4_EN.pdf [gefunden am 2017-08-01]

## Beschreibung

Die Erfindung betrifft ein Verfahren zum Betrieb einer elektrischen Anlage mit einer Mehrzahl an elektrischen Verbrauchern.

Des Weiteren betrifft die Erfindung eine Stromversorgungseinheit, die ausgelegt ist, das Verfahren durchzuführen, und eine elektrisch betriebene Anlage zur Durchführung des Verfahrens und ein Computerprogramm.

In vielen technischen Bereichen, wie zum Beispiel in der Automatisierungstechnik oder der Gebäudetechnik ist eine absolut zuverlässige Stromversorgung eine notwendige Voraussetzung für den reibungslosen Betrieb der technischen Anlage. Für den Fall, dass die reguläre Versorgungsspannung aufgrund von Störungen im Stromnetz beispielsweise in einer technischen Anlage einbricht, existieren Geräte für eine zuverlässige Stromversorgung, die geregelte Ausgangsspannungen sowohl für Gleichspannungen als auch für Wechselspannungen liefern.

Unterbrechungsfreie Stromversorgungen können bei Netzausfall einen Verbraucher durch zuverlässige Pufferung durch einen angeschlossenen Energiespeicher eine bestimmte Zeit lang mit Energie versorgen (=Pufferbetrieb). Die unterbrechungsfreien Stromversorgungen ergänzen demnach vorhandene Netzgeräte für unterbrechungsfreie Nennströme aus Batteriemodulen oder sonstigen Energiespeichern. APC Symmetra RM ist eine aus dem Stand der Technik bekannte unterbrechungsfreie Stromversorgung.

Bei Maschinen oder Anlagenkomponenten, die eine gewisse Zeitspanne zum Hoch- und Runterfahren ihrer Betriebstüchtigkeit benötigen, und welche während dieser Zeitspanne nicht ausgeschaltet werden dürfen, weil es sonst zu Beschädigungen, Einschränkungen der Betriebstauglichkeit, Datenverlust oder einer erschwerten Wiederinbetriebnahme kommen kann, sollte neben einem zuverlässigen Betrieb auch ein unterbrechungsfreies Hochfahren gewährleistet sein. Beispiele für solche Maschinen oder Anlagenkomponenten sind Personal Computer (PCs), insbesondere Industrie-PCs, die technische Anlagen steuern und/oder überwachen, aber auch Maschinen mit drehenden Teilen, bei denen erst eine gewisse Drehgeschwindigkeit erreicht werden muss, bevor sie voll betriebstauglich sind oder auch thermodynamische Maschinen, welche erst vorgeheizt oder abgekühlt werden müssen, bevor sie einsatzfähig sind.

Selbst eine unterbrechungsfreie Stromversorgung, die über einen Pufferbetrieb aufgrund eines angeschlossenen Energiespeichers verfügt, kann bei kurz hintereinander erfolgenden Einbrüchen der Versorgungsspannung den reibungslosen Betrieb nicht gewährleisten, wenn zwischenzeitlich der Energiespeicher erschöpft ist. Es kann zu Inkonsistenzen und Datenverlusten kommen. Bislang wurde die Unterbrechungsfestigkeit einer unterbrechungsfreien Stromversorgung beim Neustart eines PCs/einer Maschine nachdem der PC/die Maschine wegen eines vorherigen Einbruchs der regulären Versorgungsspannung bereits gepuffert werden musste und das Energiespeicherladeniveau dadurch gesunken ist, noch nicht betrachtet. Wenn zum Zeitpunkt des Neustarts keine ausreichende Unterbrechungsfestigkeit vorliegt, würde dies beim erneuten Einbruch der regulären Versorgungsspannung den Absturz/Crash des PCs bzw. den plötzlichen Stillstand der Maschine beim Hochfahren bedeuten. Eine maximale Ausfallzeit aufgrund einer erschwerten Wiederinbetriebnahme, Datenverlust und Beschädigungen an Maschinen und Werkstücken sind die Folge.

Auch bei Standard-Stromversorgungen ohne angeschlossenem Energiespeicher, welche daher nicht im Pufferbetrieb arbeiten können, wäre eine Unterbrechungsfestigkeit oder Unterbrechungsfreiheit wünschenswert.

Der Erfindung liegt daher die Aufgabe zugrunde, ein verbessertes Verfahren zum sicheren Betrieb einer technischen/elektrischen Anlage, welche mit einer Stromversorgungseinheit verbunden ist, bereitzustellen, sodass insbesondere ein unterbrechungsfreies Hochfahren der Komponenten der technischen Anlage gewährleistet ist. Es ist ferner die Aufgabe der Erfindung eine entsprechende Stromversorgungseinheit und eine elektrisch betriebene Anlage mit Stromversorgungen dieser Art anzugeben.

Die Aufgabe hinsichtlich des Verfahrens wird erfindungsgemäß durch die Merkmale des unabhängigen Anspruchs 1 gelöst. Hinsichtlich der Vorrichtung wird die Aufgabe durch die Merkmale des unabhängigen Anspruchs 7 gelöst.

Auf diese Weise wird ein Einschaltmanagement für Stromversorgungen erreicht, welches eine Kombination aus Einschaltverzögerungszeit und Energiespeicherladeniveau darstellt, sodass ein absolut sicheres unterbrechungs- und damit störungsfreies Hochfahren bzw. störungsfreies Hochfahren einer Mehrzahl an elektrischen Verbrauchern gewährleistet ist.

Die mit der Erfindung erzielten Vorteile bestehen insbesondere darin, dass gegenüber einer herkömmlichen unterbrechungsfreien Stromversorgungseinheit eine deutlich verbesserte Daten- und Anlagensicherheit sowie ein reibungsloser Neustart eines elektrischen Verbrauchers wie eines PCs/Maschine gewährleistet wird, auch wenn die reguläre Versorgungsspannung wiederholt hintereinander in kurzen Zeitabständen ausfällt. Auf diese Weise liegt zum Zeitpunkt des Neustarts eines PCs/einer Maschine nun dem Anwender eine Gewissheit vor, dass wirklich immer erst nach Erreichen der vom Anwender selbst vorgegebenen Bedingungen der Leistungsausgang der Stromversorgung eingeschaltet und in der Folge der PC/die Maschine wieder in Betrieb genommen wird. Potenziell zum Scheitern verurteilte Neustarts von PCs/Maschinen sind damit ausgeschlossen.

Vorteilhafte Ausgestaltungen der Erfindung sind Gegenstand der Unteransprüche.

Im Folgenden wird die Erfindung sowie deren Ausgestaltungen und weitere Vorteile anhand der Figuren, in denen Ausführungsbeispiele dargestellt sind, näher beschrieben und erläutert.

Es zeigen:
Fig. 1 eine schematische Darstellung einer elektrischen Anlage mit elektrischen Verbrauchern und einer unterbrechungsfreien Stromversorgungseinheit, welche mit Energiespeichereinheiten verbunden sind.
Fig. 2a bis Fig. 2d verschiedene Ausführungsbeispiele des Einschaltmanagements

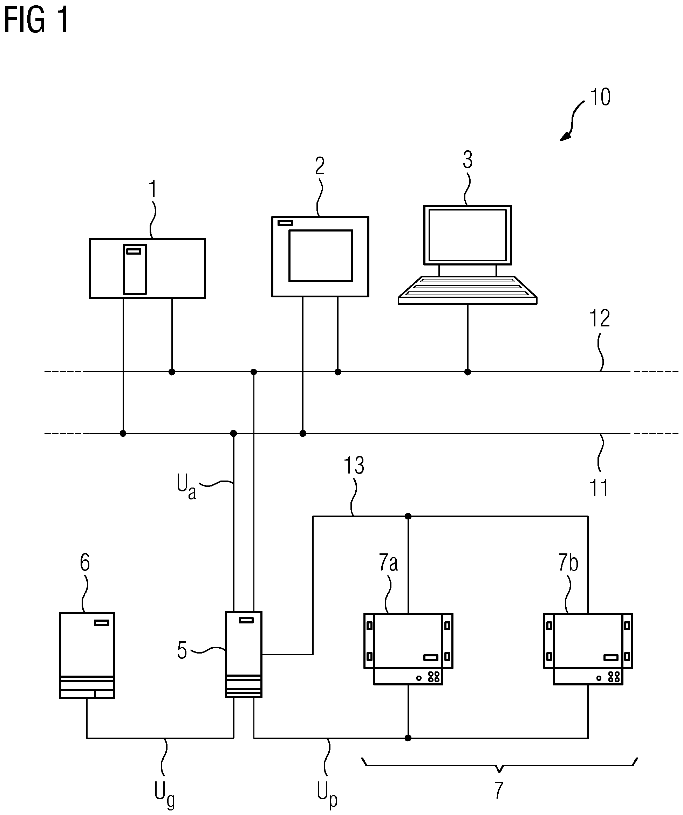

Eine Ausführungsvariante einer elektrisch betriebenen Anlage 10 mit mindestens einer Stromversorgungseinheit und mit einer Mehrzahl an elektrischen Verbrauchern 1, 2 oder 3 ist in Fig. 1 dargestellt. Die Anlage 10 kann Teil einer Automatisierungsanlage sein oder als Stromversorgung für Produktionsmaschinen und sonstige Aggregate, Maschinen und Anlagen dienen, bei denen eine kontrollierte, ggfs. unterbrechungsfreie Stromversorgung zum zuverlässigen Betrieb notwendig ist. Als Verbraucher seien hier beispielhaft Industrie-PCs 1 und 2 und ein herkömmlicher PC 3 gezeigt, welche üblicherweise zum Steuern, Bedienen und Beobachten, zum Konfigurieren oder Überwachen einer technischen Anlage eingesetzt werden.

Um Industrie-PCs oder Steuerungen betreiben zu können, benötigt man üblicherweise 24 V Gleichstrom. Um 24 V Gleichstrom zu erhalten, wird der vom Netz gelieferte Wechselstrom (in Europa 230 V) mit einem Wechselstrom/Gleichstrom-Wandler umgewandelt. Dieser AC/DC-Wandler ist üblicherweise in einer Standardstromversorgung 6 untergebracht, welche eine Grundversorgungsspannung Ug (hier in Form von 24 V Gleichstrom) liefert. Eine solche Standardstromversorgung kann Unterbrechungen der Grundversorgungsspannung allerdings nicht überbrücken. Die Standardstromversorgung 6 zur Lieferung einer Grundversorgungsspannung Ug ist üblicherweise als einzelne Baugruppe ausgestaltet.

Um die Anlage ausfallsicher zu machen, wird eine unterbrechungsfreie Stromversorgung verwendet. Eine solche unterbrechungsfreie Stromversorgungseinheit 5 ist in Fig. 1 dargestellt. Die unterbrechungsfreie Stromversorgung 5 nimmt dabei den Gleichstrom von der Standardstromversorgung 6 auf und schaltet ihn an die angeschlossenen Verbraucher 1, 2, 3 durch. Die Stromversorgungseinheit 5 hat in diesem Fall einen Gleichstrom-Gleichstrom-Wandler (DC/DC-Wandler) integriert.

Die Unterbrechungsfreiheit erreicht die Stromversorgungseinheit 5 durch die angeschlossene Energiespeichereinheit 7 zur Lieferung einer Pufferspannung Up. Die Stromversorgungseinheit 5 verfügt über eine Elektronik, die dafür sorgt, dass unterbrechungsfrei zwischen Grundversorgungsspannung Ug und Pufferspannung Up umgeschaltet werden kann. Die Stromversorgungseinheit 5 kann dabei nicht nur den Verbraucher (z.B. einen PC oder eine Maschine) eine bestimmte Zeit lang mit Energie versorgen (= Pufferbetrieb) sondern auch den Pufferbetrieb an den PC oder die Maschinensteuerung melden, was dem PC (z. B. über den Aufruf einer Batch - Datei) oder der Maschine (über das Steuerungsprogramm) das vollständige Herunterfahren und Beenden laufender Programme, das Schließen von Datenbanken ohne Datenverlust und das abschließende Herunterfahren des Betriebssystems/der Maschine ermöglicht. Hierdurch wird Daten - und Anlagensicherheit sowie der reibungslose Neustart des PCs/der Maschine gewährleistet, falls die reguläre Versorgungsspannung wiederhergestellt sein sollte.

Die Verbraucher 1, 2 und 3, welche in beliebiger Anzahl vorhanden sein können, sind in dem in Fig. 1 dargestellten Ausführungsbeispiel über ein Versorgungsnetzwerk 11, zur Versorgung mit elektrischer Energie, und optional über ein Kommunikationsnetzwerk 12, wie zum Beispiel einem Industrial Ethernet, mit der unterbrechungsfreien Stromversorgungseinheit 5 verbunden. Ist keine unterbrechungsfreie Stromversorgung in einer Anlage notwendig, werden die Netzwerke 11 und optional 12 direkt mit der Standardstromversorgung 6 zur Lieferung der Grundversorgungsspannung Ug verbunden.

Die Energiespeichereinheit 7 umfasst eine beliebige Anzahl von Batteriemodulen 7a, 7b,.... Die Batteriemodule können beispielsweise auf wartungsfreien Blei-Akkus, temperaturunempfindlichen Reinblei-Akkus, langlebigen Lithium-Akkus oder auf einer Kondensatortechnologie basieren. Bei Vorhandensein einer Energiespeichereinheit 7, kann der Ausfall von einer Grundversorgungsspannung Ug liefernden Quelle 6 für eine Zeitdauer tp durch eine Pufferspannung Up überbrückt werden, welche von der Energiespeichereinheit 7 geliefert wird.

Eine Stromversorgungseinheit 5 oder eine Standardstromversorgung 6 weist zumindest einen Leistungsausgang für die gewünschte Ausgangsspannung Ua oder den gewünschten Strom auf und kann über einen oder auch mehrere Kommunikationsausgänge wie z.B. einen USB-Port oder eine Ethernet/Profinet Schnittstelle verfügen. Je nach Verwendung existieren auch Stromversorgungseinheiten 5 oder 6, die nicht an ein Kommunikationsnetz 12 anschlossen sind bzw. gar nicht über eine Kommunikationsschnittstelle verfügen und die nur über die lokal installierte Firmware gesteuert werden sollen.

Eine unterbrechungsfreie Stromversorgungseinheit 5, wie in dem in Fig. 1 gezeigten Ausführungsbeispiel dargestellt, weist zusätzlich zu den Ausgängen zumindest zwei Spannungseingänge auf, einen ersten Eingang für die Grundversorgungsspannung Ug und einen zweiten Eingang für die Pufferspannung Up. Eine Aussteuerung der Pufferspannung kann optional über die Kommunikationsverbindung 13 erfolgen. Über eine solche Kommunikationsverbindung 13 - wenn vorhanden - kann auch der Zustand der Energiespeichermodule oder deren Ladeniveau an die Stromversorgungseinheit 5 gemeldet werden.

So muss beim Betrieb der elektrischen Anlage 10 berücksichtigt werden, dass die Batteriemodule zur Aufladung eine bestimmte Zeitdauer benötigen. Daher kann es in den Fällen, bei denen ein kontrollierter Einschalt- oder Ausschaltvorgang der Verbraucher 1, 2, 3 gewährleistet werden soll, vorteilhaft sein, ein Energiespeicherladeniveau zu ermitteln. Letzteres wird häufig anhand von vom Batteriehersteller gelieferten Kennlinien und in Abhängigkeit vom Alter, von der Temperatur und vom Ladezustand der Batteriemodule bestimmt.

Der PC/die Maschine ist mit dem Leistungsausgang der Stromversorgungseinheit 5 elektrisch verbunden. Der Neustart des PCs/der Maschine erfolgt immer sofort, wenn die reguläre Grundversorgungsspannung Ug am Leistungseingang der Stromversorgungseinheit 5 anliegt und in Folge dessen der Leistungsausgang der Stromversorgungseinheit 5 sofort eingeschaltet wird, der in diesem Fall die Ausgangsspannung Ua = Ug liefert. Im Pufferbetrieb schaltet die Stromversorgungseinheit 5 die von den Batteriemodulen der Energiespeichereinheit gelieferte Pufferspannung Up durch und es liegt die Ausgangsspannung Ua = Up an. Die Stromversorgungseinheit 5 nimmt dabei keine Rücksicht darauf, ob der Energiespeicher ausreichend geladen ist oder nicht. Ein erneuter Einbruch der regulären Grundversorgungsspannung kann ggf. nicht vollständig überbrückt werden. Zu beachten ist, dass immer, wenn die Grundversorgungsspannung Ug anliegt, gleichzeitig auch die Batteriemodule der Energiespeichereinheit aufgeladen werden.

Um nun, unter den oben genannten Bedingungen, einen geregelten Einschaltvorgang der elektrischen Verbraucher 1,2,3,... zu gewährleisten, werden erfindungsgemäß verschiedene Varianten vorgeschlagen: Ein nicht erfindungsgemäßes Einschaltmanagement für Stromversorgungen, welches entweder eine vom Anwender gewählte Einschaltverzögerungszeit berücksichtigt (= verzögerungszeitabhängiges Einschaltmanagement) oder welches in Abhängigkeit eines Energiespeicherladeniveaus (= energiespeicherladeniveauabhängiges Einschaltmanagement) das Einschalten des Leistungsausgangs einer Stromversorgungseinheit steuert. Bei Stromversorgungen mit angeschlossenem Energiespeicher, wie in Fig. 1 gezeigt, kommen erfindungsgemäß weitere Varianten, welche eine Mischung aus verzögerungszeitabhängigem Einschaltmanagement und energiespeicherladeniveauabhängigem Einschaltmanagement darstellen, zum Einsatz.

Das verzögerungszeitabhängige Einschaltmanagement ist die Variante, bei der der Anwender eine bestimmte Einschaltverzögerungszeit tv vorgibt oder konfiguriert. Nach Ablauf der Einschaltverzögerungszeit liegt am Ausgang der Stromversorgungseinheit 5 des in Fig. 1 gezeigten Ausführungsbeispiels entweder eine Grundversorgungsspannung Ug oder eine Pufferspannung Up an. Das verzögerungszeitabhängige Einschaltmanagement kann auch bei Stromversorgungen ohne Energiespeicher, also bei nichtunterbrechungsfreien Stromversorgungen, implementiert werden.

Das energiespeicherladeniveauabhängige Einschaltmanagement ist die Variante, bei der der Anwender einen Schwellwert SW für ein Ladeniveau LN der Energiespeichereinheit 7 vorgibt oder konfiguriert. Nach Erreichen dieses Schwellwertes SW, d.h. wenn das Ladeniveau LN der Energiespeichereinheit gleich oder größer als der vorgegebene Schwellwert ist, liegt am Ausgang der Stromversorgungseinheit 5 des in Fig. 1 gezeigten Ausführungsbeispiels entweder eine Grundversorgungsspannung Ug oder eine Pufferspannung Up an. Der Schwellwert wird dabei bevorzugt als Prozentzahl des maximalen Ladezustands der Batteriemodule gewählt. Alternativ kann auch eine Ladezeit tl der Energiespeichereinheit 7 ermittelt werden, während der eine Aufladung der Energiespeichereinheit 7 mit einem Ladestrom bis zu dem gewünschten Schwellwert des Energiespeicherladeniveaus erfolgt. Ein Anwender könnte dann eine gewünschte Ladezeit vorgeben, welche allerdings derart gewählt werden muss, dass eine ausreichende Aufladung der Energiespeichereinheit gewährleistet ist.

Bei der Konfiguration des energiespeicherladeniveauabhängigen Einschaltmanagement, welches für unterbrechungsfreie Stromversorgungen mit angeschlossener Energiespeichereinheit geeignet ist, muss der Anwender deutlich weniger beachten, als bei dem zeitverzögerten Einschaltmanagement, welches allerdings den Vorteil hat, dass es auch für Stromversorgungen ohne Energiespeichereinheit, also für Standardstromversorgungen, geeignet ist. Der Einsatz einer unterbrechungsfreien Stromversorgung, welche sowohl eine Zeitverzögerung bietet, als auch eine Berücksichtigung des Ladeniveaus der Energiespeichereinheit, wird sicherlich die größte Zuverlässigkeit eines Einschaltmanagements gewährleisten.

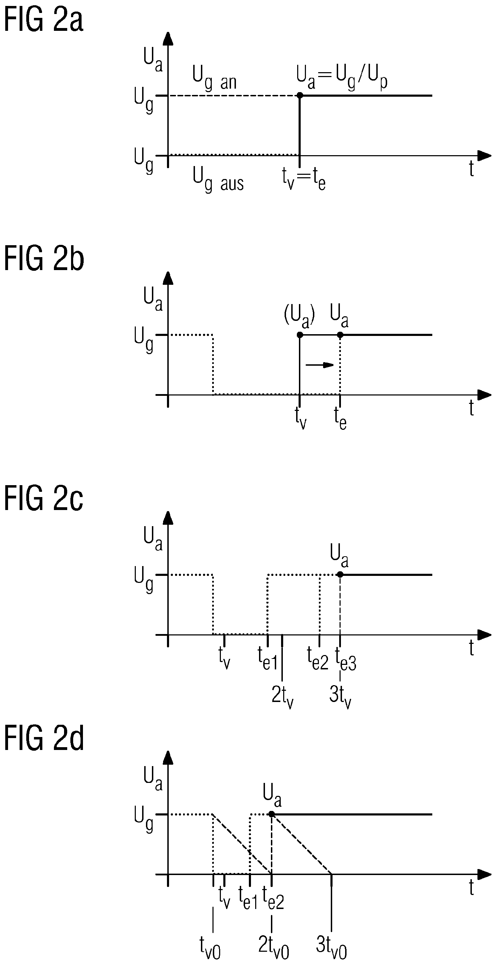

In Fig. 2 sind verschiedene Ausführungsvarianten eines Einschaltmanagements für Stromversorgungen ohne und mit angeschlossener Energiespeichereinheit dargestellt, wobei in vielen Fällen eine Kombination aus zeitverzögertem und energiespeicherladeniveauabhängigem Einschaltmanagement vorliegt. Aufgetragen sind die Funktionen der Ausgangsspannung Ua einer beliebigen Stromversorgungseinheit in Abhängigkeit von der Zeit t.

In dem nicht erfindungsgemäßen Ausführungsbeispiel aus Fig. 2a ist der einfachste Fall gezeigt, bei dem nach Ablauf der Zeitspanne tv eine Spannung Ua am Ausgang der Stromversorgungseinheit 5 anliegt. Der Einschaltzeitpunkt te der Verbraucher entspricht hier tv. Dabei ist es unerheblich, wie die Situation vor dem Einschalten aussieht. Ohne Energiespeichereinheit kann schon vor te die Grundversorgungsspannung Ug am Eingang der Stromversorgungseinheit anliegen oder die Grundversorgungsspannung Ug wird erst zum Zeitpunkt te=tv entsprechend einer Sprungfunktion durchgeschaltet. Mit Energiespeichereinheit wird zum Zeitpunkt te die Spannung durchgeschaltet, die gerade am Eingang der Stromversorgungseinheit 5 anliegt; Dabei kann es sich entweder um die Grundversorgungsspannung Ug oder um die Pufferspannung Up handeln. Allerdings ist es bei dieser Variante nachteilig, wenn keine Energiespeichereinheit vorhanden ist und gerade zum Zeitpunkt te=tv keine Grundversorgungsspannung Ug vorhanden ist.

In dem nicht erfindungsgemäßen Ausführungsbeispiel aus Fig. 2b ist eine Ausführungsvariante des zeitverzögerten Einschaltmanagements gezeigt, bei dem die zuvor eingestellte Zeitverzögerung tv bis zum Einschaltzeitpunkt te verlängert wird, wenn eine bestimmte Bedingung erfüllt ist. Bei dieser Variante wird die Möglichkeit eines Ausfalls der Grundversorgungsspannung während der vorgegebenen Einschaltverzögerungszeit tv mitberücksichtigt.

Es ist in einer Variante eine Verlängerung der Einschaltverzögerungszeit tv bis zu dem Zeitpunkt te vorgesehen, an dem die Grundversorgungsspannung Ug wieder zum Durchschalten bereitsteht. Diese Variante ist insbesondere für Stromversorgungseinheiten ohne Energiespeichereinheit sinnvoll. Stromversorgungseinheiten mit angeschlossener Energiespeichereinheit (wie in Fig. 1 gezeigt) wird durch die Verlängerung der Einschaltverzögerungszeit tv bis zum Zeitpunkt te die durch den Ausfall der Grundversorgungsspannung Ug verlorengegangene Ladezeit tl verschafft, die mindestens benötigt wird, um die Energiespeichereinheit ausreichend aufzuladen. Für Stromversorgungseinheiten mit angeschlossener Energiespeichereinheit (wie in Fig. 1 gezeigt) kann auch zusätzlich ein Ladeniveau LN der Energiespeichereinheit überprüft werden und erst in Abhängigkeit des Ladeniveaus LN die Pufferspannung Up durchgeschaltet werden. Alternativ kann eine Ausgangsspannung Ua erst dann zur Verfügung stehen, wenn das Ladeniveau der Energiespeichereinheit einen Schwellwert erreicht hat. In diesem Fall kann zum Einschaltzeitpunkt te sowohl Ug oder Up durchgeschaltet werden. Hierbei wurde berücksichtigt, dass ein Aufladen der Energiespeichereinheit nur möglich ist, wenn die Grundversorgungsspannung Ug vorhanden ist. Diese Variante würde somit den Fall abdecken, bei dem kurz vor Erreichen eines bestimmten Ladeniveaus des Energiespeichers die Grundversorgungsspannung einbricht. Der Einschaltvorgang würde in diesem Fall so lange verzögert, bis ein "sicheres" Ladeniveau erreicht ist, das für eine ausreichend große Zeitspanne eine Pufferspannung Up bereitstellen kann.

In Fig. 2c ist ein nicht erfindungsgemäßes Ausführungsbeispiel des zeitverzögerten Einschaltmanagements gezeigt, bei dem die zuvor eingestellte Zeitverzögerung tv so oft wiederholt wird, bis eine bestimmte Bedingung erfüllt wird. Auch bei dieser Variante wird die Möglichkeit eines Ausfalls der Grundversorgungsspannung während der vorgegebenen Einschaltverzögerungszeit tv mit berücksichtigt.

In einer Variante dieses Ausführungsbeispiels wird bei Ausfall der Grundversorgungsspannung Ug die Einschaltverzögerungszeit tv so oft wiederholt bis die Grundversorgungsspannung Ug wieder bereit steht (te1 in Fig. 2c) oder alternativ die Grundversorgungsspannung Ug mindestens eine vollständige Einschaltverzögerungszeit tv bereitgestanden hat (te3 in Fig. 2c). Am Ausgang der Stromversorgungseinheit kann dann die Ausgangsspannung Ua entweder sofort bei Vorhandensein der Grundversorgungsspannung Ug ausgegeben werden (zum Zeitpunkt te1 oder te2 in Fig. 2c) oder aber erst nach Ablauf eines Vielfachen der Einschaltverzögerungszeit n*tv zum Zeitpunkt te3, wobei n eine beliebige Zahl > 1 ist. Auch diese Variante ist insbesondere für Stromversorgungseinheiten ohne Energiespeichereinheit sinnvoll. Für Stromversorgungseinheiten mit angeschlossener Energiespeichereinheit (wie in Fig. 1 gezeigt) kann zusätzlich ein Ladeniveau LN der Energiespeichereinheit überprüft werden und erst in Abhängigkeit des Ladeniveaus LN die Pufferspannung Up zu den Zeitpunkten te1 (wenn das Ladeniveau ausreichend hoch ist) oder te2 (erst nach Ablauf eines Vielfachen der Einschaltverzögerungszeit n*tv bei ausreichend hohem Ladeniveau durchgeschaltet werden. Dies ist zum Beispiel für Synchronisationszwecke der Verbraucher 1, 2, 3 besonders gut geeignet. Alternativ kann auch bei diesem Ausführungsbeispiel zunächst ein Aufladen der Energiespeichereinheit erfolgen und erst nach Erreichen eines Schwellwertes des Ladeniveaus der Energiespeichereinheit am Ausgang der Stromversorgungseinheit eine Spannung Ua = Ug oder Ua = Up zu den Zeitpunkten te1, te2 oder te3 eingeschaltet werden.

In Fig. 2d ist eine erfindungsgemäße Ausführungsvariante des zeitverzögerten Einschaltmanagements gezeigt, bei dem im Falle eines Ausfalls der Grundversorgungsspannung Ug während der vorgegebenen Einschaltverzögerungszeit tv die Einschaltverzögerungszeit tv ab dem Zeitpunkt des Ausfalls der Grundversorgungsspannung Ug erneut von vorne zu laufen beginnt und so oft wiederholt wird, bis
a) die Grundversorgungsspannung Ug wieder bereit steht, oder
b) nach Überprüfung eines Ladeniveaus LN der Energiespeichereinheit in Abhängigkeit des Ladeniveaus am Ausgang der Stromversorgungseinheit als Ausgangsspannung Ua die Pufferspannung Up ausgegeben wird, oder
c) ein Ladeniveau LN der Energiespeichereinheit einen Schwellwert SW erreicht hat, oder
d) die Grundversorgungsspannung Ug mindestens eine vollständige Einschaltverzögerungszeit tv bereitgestanden hat.

In Fig. 2d ist zu Beginn der Zeitachse die Grundversorgungsspannung Ug eingeschaltet. Zum Zeitpunkt tv0, welcher vor der eingestellten Verzögerungszeit tv liegt, bricht die Grundversorgungsspannung Ug ein. Nun wird die Zeitverzögerungszeit sozusagen auf 0 zurückgesetzt und beginnt von vorne zu laufen (Countdown) und wiederholt sich so oft (2tv0, 3tv0 in Fig. 2d) bis eine der o.g. Bedingungen a) bis d) erfüllt ist. Zur Einschaltzeit te1 oder te2 schaltet die Stromversorgungsspannung entweder die Grundversorgungsspannung Ua=Ug durch oder die Pufferspannung Ua=Up, wenn das Ladeniveau LN der Energiespeichereinheit ausreichend hoch ist oder ein Schwellwert eines Ladeniveaus LN der Energiespeichereinheit überschritten ist. Die Einschaltzeit te1 wird gewählt, sobald eine der Spannungen Ug oder Up (bei ausreichendem Ladeniveau) verfügbar ist. Die Einschaltzeit te2 wird gewählt, wenn eine der Spannungen Ug oder Up erst nach Ablauf eines Vielfachen n (n = natürliche Zahl) der Verzögerungszeit (des Countdowns) am Ausgang der Stromversorgungseinheit anliegen soll (zum Beispiel für Synchronisationszwecke). Denkbar ist auch, dass die Versorger erst zurzeit 3t0 eingeschaltet werden, also wenn die Grundversorgungsspannung Ug mindestens eine vollständige Einschaltverzögerungszeit tv bereitgestanden hat.

Für alle bisher beschriebenen Ausführungsvarianten (beschrieben in den Figuren 2b, 2c und 2d) gilt, dass die Ladeniveaus und Schwellwerte, die nach der Verlängerung, der Wiederholung oder dem Countdown der Verzögerungszeit ein zuverlässiges Einschalten gewährleisten, beispielsweise von einem Anwender vorgegeben werden oder auch von einer Applikation vorgegeben werden, in welcher bereits Erfahrungswerte eingespeichert sind. Selbstverständlich kann eine Applikation die nötige Einschaltverzögerungszeit auch fortlaufend ermitteln. Selbstlernend kann die Applikation die Einschaltverzögerungszeit anpassen, um z.B. durch Verlängern der Verzögerungszeit auf einen alternden Energiespeicher oder auf Veränderungen am PC/an der Maschine zu reagieren oder durch Verkürzen der Verzögerungszeit auf z.B. einen neuen Energiespeicher (wogegen der alte getauscht worden ist) oder auf Veränderungen am PC/an der Maschine zu reagieren. Durch die fortlaufende Ermittlung der Verzögerungszeit, die mit einem Condition Monitoring des Energiespeichers oder sogar des PCs/der Maschine gekoppelt ist, kann der optimale Austauschzeitpunkt des Energiespeichers festgestellt und über ein Meldesystem gemeldet werden, um das sichere Hoch- und Herunterfahren des PCs/der Maschine in einem weiteren Punkt zu gewährleisten.

Die Einschaltmanagementvarianten werden bevorzugt als Firmware in der Stromversorgung implementiert oder aber auch erfindungsgemäß als Applikationssoftware, z.B. als Softwarebaustein auf einem Prozessor in oder außerhalb der Stromversorgung. Da - wie in Fig.1 dargestellt - die Stromversorgungseinheit 5 mit einem Kommunikationsnetzwerk 12, wie zum Beispiel einem Industrial Ethernet, verbunden werden kann und dafür in der Regel entsprechende digitale Ein- und Ausgänge, USB- oder Ethernet/Profinet-Schnittstellen aufweisen kann, ergeben sich vielfache Implementierungsmöglichkeiten. So kann die Einschaltmanagement-Applikationssoftware auch auf einem Leitrechner eines Leitsystems einer technischen Anlage implementiert sein, wobei der Leitrechner über das Netzwerk 12 oder sonstige Netzwerke mit der Stromversorgung kommuniziert und Daten austauscht. Durch die Netzanbindung ist auch eine Anbindung ans Internet möglich, wodurch sich weitere Realisierungsvarianten ergeben. Beispielsweise ist dann auch die Nutzung einer IT-Infrastruktur wie dem Cloud-Computing möglich. IT-Leistungen wie beispielsweise Speicherplatz, Rechenleistung oder Anwendungssoftware können dann als Service über das Internet genutzt werden und auf der Stromversorgungseinheit ist nur eine einfache Schaltlogik für das Durch- und Anschalten der entsprechenden Spannungen vorhanden. Durch die Integration oder Kommunikationsanbindung der erfindungsgemäßen Stromversorgungseinheit in oder an PCbasierte Systeme wird eine einfache Konfiguration und Überwachung, umfangreiche Diagnosemöglichkeiten über den Zustand aller Komponenten der elektrischen Anlage und ein Fern-Monitoring via integriertem Web-Server erreicht. Außerdem ist ein Zugriff auf Gerätekonfigurationsdaten und Betriebsdaten wie z.B. die Ströme und Spannungen, den Ladestrom und Batteriestrom möglich (beispielsweise für den Zweck eines Condition Monitorings aller Komponenten der elektrischen Anlage und insbesondere der Stromversorgungseinheit und Energiespeicher).

Das Engineering, also die Konfiguration der Einschaltmanagement-Applikationssoftware kann in einer Ausführung über ein Engineering-Softwaretool erfolgen. Bei Netzausfall ermöglichen die Pufferspannung und die Einbindung der Stromversorgung in ein Netzwerk, dass die Stromversorgungen auch unabhängig voneinander in einen definierten Zustand gebracht werden, z.B. auch zeitversetzt. Hierfür stehen dann beispielsweise Funktionsbausteine z.B. für die SIMATIC der Fa. Siemens bereit. Durch Integration der Einschaltmanagement-Applikationssoftware in ein übergeordnetes Engineering- oder Automatisierungssystem oder auch Leitsystem können beliebige Daten, Zustände, Alarme, Diagnoseinformationen bei Inbetriebnahme einer technischen Anlage die Konfigurierung oder Parametrierung systemimmanent vorgegeben werden und im laufenden Betrieb beobachtet und visualisiert werden. Die entsprechende Gerätekonfiguration (Wahl der Einschaltmanagementvariante und die Eingabe der gewünschten Verzögerungszeit bzw. des Energiespeicherladeniveaus) kann dabei über ein Engineering Tool an die Stromversorgungseinheit übertragen werden oder direkt über einen Webserver der Stromversorgungseinheit vorgenommen werden.

Sowohl das verzögerungszeitabhängige als auch das energieniveauabhängige Einschaltmanagement funktionieren auch dann, wenn es sich um Stromversorgungseinheiten handelt, die nicht an ein Kommunikationsnetz (12, 13) anschlossen sind bzw. gar nicht über eine Kommunikationsschnittstelle verfügen. Insbesondere für Stromversorgungseinheiten ohne Kommunikationsnetz/Kommunikationsschnittstelle ist es besonders vorteilhaft, die gewünschte Variante des verzögerungszeitabhängigen Einschaltmanagements bequem über einen Schalter wie z.B. einen Drehkodierschalter direkt an der Stromversorgung manuell einzustellen, vorausgesetzt die Einschaltmanagementvarianten sind in der Firmware der Stromversorgung implementiert. Der Anwender wählt dann je nach Anwendung die passende Variante aus.

Aber auch das energieniveauabhängige Einschaltmanagement kann ohne Kommunikationsnetz/Kommunikationsschnittstelle (Kommunikationsnetzwerke 12 und 13) angewendet werden, wenn die Stromversorgungseinheit 5 in der Lage ist, die Energie zu messen, die während des Pufferbetriebs dem Energiespeicher 7 entnommen wurde. Diese Energie muss dann dem Energiespeicher 7 erst wieder zugeführt werden (oder aber mindestens die Energiemenge, um die Schaltschwelle SW zu erreichen), bevor der Leistungsausgang wieder eingeschaltet wird, um erfindungsgemäß einen sicheren Wiederbetrieb zu gewährleisten.

Zudem ist beim energiespeicherladeniveauabhängigen Einschaltmanagement durchaus denkbar, es als Standardvorgehensweise in der Firmware der Stromversorgung zu verankern.

Beim verzögerungszeitabhängigen Einschaltmanagement wird wie beschrieben entweder manuell von einem Anwender oder über eine Engineering-Tool oder ein übergeordnetes System eine bestimmte Einschaltverzögerungszeit vorgegeben. Dieser Zeitraum sollte ausreichend groß eingestellt werden können, d. h. ein frei wählbarer Zeitraum zwischen einer Sekunde und der maximalen Ladezeit des verwendeten Energiespeichers (diese kann in den Stundenbereich hineinreichen). Die Einschaltverzögerungszeit sollte so groß gewählt werden, dass der verwendete und bis an die Entladungsgrenze entladene Energiespeicher wieder bis zu einem bestimmten Ladeniveau oder vollständig aufgeladen werden kann, um sicherzustellen, dass die Hochfahrzeit z.B. eines PCs/einer Maschine plus Herunterfahrzeit des PCs/der Maschine vom Energiespeicher überbrückt werden kann. Die Einschaltverzögerungszeit wird immer dann für das Einschalten des Leistungsausgangs berücksichtigt, wenn an der Stromversorgung die reguläre Versorgungsspannung anliegt aber im vorhergehenden Betrieb ein Ausfall der regulären Versorgungsspannung verzeichnet und in den Pufferbetrieb gegangen werden musste, der das Herunterfahren des PCs/der Maschine ausgelöst hat. Es ist durchaus denkbar eine Zusatzoption anzubieten, dass generell (also auch ohne dass ein Pufferbetrieb im vorhergehenden Betrieb der Stromversorgung gewesen sein musste, der das Herunterfahren eines PCs/einer Maschine ausgelöst hat) die Einschaltverzögerung beim Wiederbetrieb der Stromversorgung abgewartet werden soll. Die verzögerungszeitabhängige Variante könnte bevorzugt Einsatz finden, wenn das in Betrieb nehmen von mehreren Maschinen immer synchron erfolgen muss. D.h. wenn eine Anzahl von Maschinen untereinander und vor allem von derselben Versorgungsspannung abhängig sind und immer gleichzeitig wieder in Betrieb genommen werden müssen.

Beim energiespeicherladeniveauabhängigen Einschaltmanagement entscheidet das Energiespeicherladeniveau darüber, wann der Leistungsausgang der Stromversorgung eingeschaltet wird, wenn an der Stromversorgung die reguläre Versorgungsspannung anliegt, aber im vorhergehenden Betrieb ein Ausfall der regulären Versorgungsspannung verzeichnet wurde und in den Pufferbetrieb gegangen werden musste, der das Herunterfahren eines PCs/einer Maschine ausgelöst hat. Ein Anwender muss bei der Konfiguration des reinen energiespeicherladeniveauabhängigen Einschaltmanagements deutlich weniger berücksichtigen als beim verzögerungszeitabhängigen Einschaltmanagement. Aber auch hier ist es denkbar, eine Zusatzoption anzubieten, dass generell (also auch ohne dass ein Pufferbetrieb im vorhergehenden Betrieb der Stromversorgung gewesen sein musste, der das Herunterfahren des PCs/der Maschine ausgelöst hat) das Erreichen des eingestellten Energiespeicherladeniveaus beim Wiederbetrieb der Stromversorgung abgewartet werden soll. Selbstverständlich kann eine Applikation die für das Hoch- und Herunterfahren des PCs/der Maschine benötigte Energie auch fortlaufend ermitteln (das Messen der Energie kann dabei durch die Stromversorgungseinheit selbst geschehen oder über eine gesonderte Vorrichtung) und somit das für den abgesicherten Wiederbetrieb benötigte Energiespeicherladeniveau und die zugehörige Schaltschwelle neu festlegen. Selbstlernend kann sich die Applikation dann über das Hochsetzen der Schaltschwelle auf z.B. einen alternden Energiespeicher oder auf Veränderungen am PC/der Maschine einstellen oder sich über das Heruntersetzen der Schaltschwelle auf z.B. einen neuen Energiespeicher (wogegen der alte getauscht worden ist) oder auf Veränderungen am PC/der Maschine einstellen. Durch die fortlaufende Ermittlung der Schaltschwelle, die nichts anderes als ein Condition Monitoring des Energiespeichers oder sogar des PCs/der Maschine darstellt, kann der optimale Austauschzeitpunkt des Energiespeichers festgestellt und über ein Meldesystem gemeldet werden, um das sichere Hoch- und Herunterfahren des PCs/der Maschine entsprechend zu gewährleisten.

## Patentansprüche

1. Verfahren zum Betrieb einer elektrischen Anlage (10) mit einer Mehrzahl an elektrischen Verbrauchern (1,2,3 ...), welche an mindestens eine Stromversorgungseinheit (5) angeschlossen sind und von dieser mit einer Spannung (Ua) versorgt werden,
- wobei die Stromversorgungseinheit (5) entweder eine Grundversorgungsspannung (Ug) durchschaltet oder im Falle eines Ausfalls der Grundversorgungsspannung (Ug) eine Pufferspannung (Up) durchschaltet, welche von einer Energiespeichereinheit (7) bereitgestellt wird,
- wobei zur Durchführung eines geregelten Einschaltvorgangs der elektrischen Verbraucher (1,2,3,... ) eine Einschaltverzögerungszeit (tv) vorgegeben oder ermittelt wird, nach deren Ablauf am Ausgang der Stromversorgungseinheit (5) entweder eine Grundversorgungsspannung (Ug) oder eine Pufferspannung (Up) durchgeschaltet wird,
**dadurch gekennzeichnet,**
**dass** im Falle eines Ausfalls der Grundversorgungsspannung (Ug) vor Ablauf der vorgegebenen Einschaltverzögerungszeit (tv) eine Applikations-Software das Einschalten der Stromversorgungseinheit (5) steuert, welche eine Kombination aus einem verzögerungszeitabhängigen und energiespeicherladeniveauabhängigen Einschaltmanagement ist und derart ausgestaltet ist, dass
die Einschaltverzögerungszeit (tv) ab dem Zeitpunkt des Ausfalls der Grundversorgungsspannung (Ug) erneut von vorne zu laufen beginnt und sich bis zu einer Einschaltzeit wiederholt,
- wobei eine erste Einschaltzeit (tel) gewählt wird, sobald die Grundversorgungsspannung (Ug) oder die Pufferspannung (Up) verfügbar ist, wobei zur Durchschaltung der Pufferspannung (Up) das Ladeniveau (LN) zuvor überprüft wurde, ob es ausreichend hoch ist oder ein Schwellwert (SW) eines Ladeniveaus (LN) der Energiespeichereinheit (7) überschritten ist,
- wobei eine zweite Einschaltzeit (te2) gewählt wird, wenn die Grundversorgungsspannung (Ug) oder die Pufferspannung (Up) erst nach Ablauf eines Vielfachen n der Einschaltverzögerungszeit (tv) am Ausgang der Stromversorgungseinheit anliegen soll, wobei n eine natürliche Zahl ist und wobei zur Durchschaltung der Pufferspannung (Up) das Ladeniveau (LN) zuvor überprüft wurde, ob es ausreichend hoch ist oder ein Schwellwert (SW) eines Ladeniveaus (LN) der Energiespeichereinheit (7) überschritten ist.

2. Verfahren nach Anspruch 1,
**dadurch gekennzeichnet,**
**dass** das Ladeniveau (LN) oder der Schwellwert (SW) von einem Anwender vorgegeben wird oder kontinuierlich ermittelt wird.

3. Verfahren nach Anspruch 1 oder 2,
**dadurch gekennzeichnet,**
**dass** die Stromversorgungseinheit (5) über ein erstes Kommunikationsnetz (12) mit den elektrischen Verbrauchern (1,2,3...) und über ein zweites Kommunikationsnetz (13) mit der Energiespeichereinheit (7) Daten austauscht,
wobei die Daten eine Auswahl aus zumindest den folgenden Größen umfasst: Spannungswerte (Ua, Ug, Up), Schwellwerte (SW), Ladeniveaus (LN) der Energiespeichereinheit (7), Einschaltverzögerungszeit (tv), sonstige Zeitspannen oder Zeitwerte.

4. Verfahren nach einem der Ansprüche 1 bis 3,
**dadurch gekennzeichnet,**
**dass** Daten manuell oder im Rahmen eines Engineerings der elektrischen Anlage oder bei einer Konfigurierung oder Parametrierung der Stromversorgungseinheit (5) vorgegeben werden.

5. Verfahren nach einem der vorhergehenden Ansprüche,
**dadurch gekennzeichnet,**
**dass** die am Ausgang der Stromversorgungseinheit (5) ausgegebene Spannung (Ug, Up) aufgeteilt wird und zeitversetzt den elektrischen Verbrauchern (1,2,3 ...) zur Verfügung gestellt wird.

6. Verfahren nach einem der vorhergehenden Ansprüche,
**dadurch gekennzeichnet**
**dass** eine Ladezeit (tl) der Energiespeichereinheit (7) ermittelt wird, während der eine Aufladung der Energiespeichereinheit (7) bis zu dem Schwellwert (SW) des Energiespeicherladeniveaus erfolgt.

7. Stromversorgungseinheit (5),
aufweisend
- mindestens einen Ausgang zur Versorgung einer Mehrzahl an elektrischen Verbrauchern (1,2,3 ...) mit einer Spannung (Ua),
- mindestens einen ersten Eingang, der mit einem Ausgang einer Spannungsquelle (6) verbunden ist, die eine Grundversorgungsspannung (Ug) liefert,
- mindestens einen zweiten Eingang, der mit einem Ausgang einer Energiespeichereinheit (7) verbunden ist, die bei Ausfall der Grundversorgungsspannung (Ug) eine Pufferspannung (Up) liefert,
**dadurch gekennzeichnet,**
**dass** die Stromversorgungseinheit (5) zur Durchführung eines geregelten Einschaltvorgangs der elektrischen Verbraucher (1,2,3 ...) ausgebildet ist,
ein Verfahren nach einem der Ansprüche 1 bis 6 durchzuführen.

8. Stromversorgungseinheit (5) nach Anspruch 7,
**dadurch gekennzeichnet,**
**dass** zumindest eine erste Schnittstelle zur Kommunikation und zum Datenaustausch über ein erstes Kommunikationsnetz (12) mit den elektrischen Verbrauchern (1,2,3...) und zumindest eine zweite Schnittstelle zur Kommunikation und zum Datenaustausch über ein zweites Kommunikationsnetz (13) mit der Energiespeichereinheit (7) vorhanden ist.

9. Stromversorgungseinheit (5) nach einem der Ansprüche 7 oder 8,
**dadurch gekennzeichnet,**
**dass** ein Modul für die Ermittlung eines Energiespeicherladeniveaus der Energiespeichereinheit (7) und/oder der Ladezeit (tl) vorgesehen ist.

10. Stromversorgungseinheit (5) nach einem der Ansprüche 7 bis 9,
**dadurch gekennzeichnet, dass** zumindest eine weitere Schnittstelle zur Kommunikation mit externen Servern oder Leitsystemen vorhanden ist oder dass diese Kommunikation über die erste oder zweite Schnittstelle durchgeführt wird.

11. Stromversorgungseinheit (5) nach einem der Ansprüche 7 bis 10,
**dadurch gekennzeichnet,**
**dass** Mittel zur Durchführung von Engineering, Konfiguration und Parametrierung der Einheit (5) vorhanden sind.

12. Stromversorgungseinheit (5) nach einem der Ansprüche 7 bis 11,
**dadurch gekennzeichnet,**
**dass** die Energiespeichereinheit (7) eine beliebige Anzahl an Batteriemodulen (7a, 7b) umfasst.

13. Elektrisch betriebene Anlage (10) mit einer Mehrzahl an elektrischen Verbrauchern (1,2,3 ...), welche mindestens eine Stromversorgungseinheit gemäß einem der Ansprüche 7 bis 12 umfasst.

14. Elektrisch betriebene Anlage (10) nach Anspruch 13, wobei die Stromversorgungseinheit (5) und/oder die elektrischen Verbraucher (1,2,3,) Softwarebausteine umfassen und derart ausgestaltet sind, dass sie über ein Softwarewerkzeug parametrierbar sind.

15. Computerprogramm mit durch einen Computer ausführbaren Programmcodeanweisungen zur Implementierung eines Verfahrens nach einem der Ansprüche 1 bis 6, wenn das Computerprogramm auf einer Stromversorgungseinheit (5) nach einem der Ansprüche 7 bis 12 ausgeführt wird.

## Claims

1. Method for operating an electrical system (10) having a plurality of electrical loads (1, 2, 3...) which are connected to at least one power supply unit (5) and are supplied with voltage (Ua) by said power supply system,
- wherein the power supply unit (5) either connects through a basic supply voltage (Ug) or
in the case of a failure of the basic supply voltage (Ug) connects through a buffer voltage (Up) which is provided by an energy store unit (7),
- wherein
a switch-on delay time (tv) is predetermined or determined in order to carry out a regulated switch-on process of the electrical load (1, 2, 3,...), after the expiry of which at the output of the power supply unit (5) either a basic supply voltage (Ug) or a buffer voltage (Up) is connected through **characterised in that**
in the event of failure of the basic supply voltage (Ug) before expiry of the predetermined switch-on delay time (tv), an item of application software controls the switching on of the power supply unit (5), which is a combination of a delay time-dependent and energy storage charge level-dependent switch-on management and is designed so that the switch-on delay time (tv) begins to run again from the time instant of failure of the basic supply voltage (Ug) and is repeated up to a switch-on time,
- wherein a first switch-on time (tel) is selected as soon as the basic supply voltage (Ug) or the buffer voltage (Up) is available, wherein for through-connection purposes of the buffer voltage (Up), the charge level (LN) was previously checked to determine whether it is sufficiently high or a threshold value (SW) of a charge level (LN) of the energy storage unit (7) is exceeded,
- wherein a second switch-on time (te2) is selected if the basic supply voltage (Ug) or the buffer voltage (Up) is to rest at the output of the power supply unit only after a multiple n of the switch-on delay time (tv) has elapsed, wherein n is a natural number and wherein for through-connection purposes of the buffer voltage (Up), the charge level (LN) was previously checked to determine whether it is sufficiently high or a threshold value (SW) of a charge level (LN) of the energy storage unit (7) is exceeded.

2. Method according to claim 1,
**characterised in that**
the charge level (LN) or the threshold value (SW) is predetermined by a user or determined continuously.

3. Method according to claim 1 or 2,
**characterised in that**
the power supply unit (5) exchanges data with the electrical loads (1, 2, 3...) by way of a first communication network (12) and with the energy store unit (7) by way of a second communication network (13),
wherein the data comprises a selection of at least the following variables: voltage values (Ua, Ug, Up), threshold values (SW), charge level (LN) of the energy store unit (7), switch-on delay time (tv), other time periods or time values.

4. Method according to one of claims 1 to 3,
**characterised in that**
data, is predetermined manually or within the scope of an engineering of the electrical system or with a configuration or parameterization of the power supply unit (5).

5. Method according to one of the preceding claims,
**characterised in that**
the voltage (Ug, Up) output at the output of the power supply unit (5) is divided and is made available to the electrical loads (1, 2, 3...) with a time delay.

6. Method according to one of the preceding claims,
**characterised in that**
a charging time (t1) of the energy store unit (7) is determined, during which the energy store unit (7) is charged up to the threshold value (SW) of the energy store charge level.

7. Power supply unit (5),
having
- at least one output for supplying a voltage (Ua) to a plurality of electrical loads (1, 2, 3, ...),
- at least one first input, which is connected to an output of a voltage source (6), which supplies a basic supply voltage (Ug),
- at least one second input, which is connected to an output of an energy store unit (7), which supplies a buffer voltage (Up) upon failure of the basic supply voltage (Ug),
**characterised in that**
the power supply unit (5) is embodied to carry out a regulated switch-on process of the electrical load (1, 2, 3...),
in order to carry out a method according to one of claims 1 to 6.

8. Power supply unit (5) according to claim 7,
**characterised in that**
at least one first interface for communication and for data exchange by way of a first communication network (12) with the electrical loads (1, 2, 3..) and at least one second interface for communication and for data exchange by way of a second communication network (13) with the energy store unit (7) is available.

9. Power supply unit (5) according to one of claims 7 or 8,
**characterised in that**
a module for determining an energy store charge level of the energy store unit (7) and/or the charging time (t1) is provided.

10. Power supply unit (5) according to one of claims 7 to 9,
**characterised in that**
at least one further interface is available for communication with external servers or control systems or this communication is carried out by way of the first or second interface.

11. Power supply unit (5) according to one of claims 7 to 10,
**characterised in that**
means for carrying out engineering, configuration and parameterization of the unit (5) are available.

12. Power supply unit (5) according to one of claims 7 to 11,
**characterised in that**
the energy store unit (7) comprises any number of battery modules (7a, 7b).

13. Electrically operated system (10) with a plurality of electrical loads (1, 2, 3...),
which comprises at least one power supply unit according to one of claims 7 to 12.

14. Electrically operated system (10) according to claim 13, wherein the power supply unit (5) and/or the electrical loads (1,2,3) comprise software modules and are configured such that they can be parameterised by way of a software tool.

15. Computer program having program code instructions executable by a computer for implementing a method according to one of claims 1 to 6, when the computer program is run on a power supply unit (5) according to one of claims 7 to 12.

## Revendications

1. Procédé pour faire fonctionner une installation (10) électrique ayant une pluralité de consommateurs (1, 2, 3 ...) électriques, qui sont raccordés à au moins une unité (5) d'alimentation en courant et qui sont alimentés par celle-ci en une tension (Ua),
- dans lequel l'unité (5) d'alimentation en courant applique une tension (Ug) d'alimentation de base ou, dans le cas d'un défaut de la tension (Ug) d'alimentation de base, une tension (Up) tampon, qui est mise à disposition par une unité (7) d'accumulation d'énergie,
- dans lequel, pour effectuer une opération réglée de mise en circuit des consommateurs (1, 2, 3, ...) électriques, on prescrit ou on détermine un temps (tv) de retard de mise en circuit à l'expiration duquel on applique, à la sortie de l'unité (5) d'alimentation en courant, soit une tension (Ug) d'alimentation de base soit une tension (Up) tampon,
**caractérisé en ce que**
dans le cas d'un défaut de la tension (Ug) d'alimentation de base avant l'expiration du temps (tv) donné à l'avance de retard de mise en circuit, un logiciel d'application commande la mise en circuit de l'unité (5) d'alimentation en courant, laquelle est une combinaison d'une gestion de mise en circuit, qui dépend du temps de retard et d'une gestion de mise en circuit, qui dépend d'un niveau de charge à l'accumulateur d'énergie, et est conformé de manière à ce que
le temps (tv) de retard de mise en circuit commence à courir à nouveau dès le début, à partir de l'instant du défaut de la tension (Ug) d'alimentation de base et se répète jusqu'à un temps de mise en circuit,
- dans lequel on choisit un premier temps (tel) de mise en circuit, dès que la tension (Ug) d'alimentation de base ou la tension (Up) tampon est disponible, dans lequel, pour l'application de la tension (Up) tampon, le niveau (LN) de charge a été contrôlé auparavant sur le point de savoir s'il est suffisamment haut ou si une valeur (SW) de seuil d'un niveau (LN) de charge de l'unité (7) d'accumulation d'énergie est dépassé,
- dans lequel on choisit un deuxième temps (te2) de mise en circuit, si la tension (Ug) d'alimentation de base ou la tension (Up) tampon doit, seulement après l'expiration d'un multiple n du temps (tv) de retard de mise en circuit, qui devait s'appliquer à la sortie de l'unité d'alimentation en courant, n étant un nombre naturel et dans lequel, pour l'application de la tension (Up) tampon, le niveau (LN) de charge a été contrôlé auparavant sur le point de savoir s'il est suffisamment haut ou si une valeur (SW) de seuil d'un niveau (LN) de charge de l'unité (7) d'accumulation d'énergie est dépassée.

2. Procédé suivant la revendication 1,
**caractérisé en ce que**
l'on prescrit le niveau (LN) de charge ou la valeur (SW) de seuil par un utilisateur ou on le détermine en continu.

3. Procédé suivant la revendication 1 ou 2,
**caractérisé en ce que**
l'unité (5) d'alimentation en courant échange des données avec les consommateurs (1, 2, 3 ...) électriques par un premier réseau (12) de communication et avec l'unité (7) d'accumulation d'énergie par un deuxième réseau (13) de communication,
dans lequel les données comprennent un choix parmi au moins les grandeurs suivantes : valeurs (Ua, Ug, Up) de tension, valeurs (SW) de seuil, niveaux (LN) de charge de l'unité (7) d'accumulation d'énergie, temps (tv) de retard de mise en circuit, autres laps de temps ou valeurs de temps.

4. Procédé suivant l'une des revendications 1 à 3,
**caractérisé en ce que**
l'on prescrit les données manuellement ou dans le cadre d'une ingénierie de l'installation électrique ou lors d'une configuration ou d'un paramétrage de l'unité (5) d'alimentation en courant.

5. Procédé suivant l'une des revendications précédentes,
**caractérisé en ce que**
l'on répartit la tension (Ug, Up) émise à la sortie de l'unité (5) d'alimentation en courant et on la met à disposition des consommateurs (1, 2, 3 ...) électriques d'une manière décalée dans le temps.

6. Procédé suivant l'une des revendications précédentes,
**caractérisé en ce que**
l'on détermine un temps (t1) de charge de l'unité (7) d'accumulation d'énergie, pendant lequel une charge de l'unité (7) d'accumulation d'énergie s'effectue jusqu'à la valeur (SW) de seuil du niveau de charge de l'accumulateur d'énergie.

7. Unité (5) d'alimentation en courant,
comportant
- au moins une sortie d'alimentation d'une pluralité de consommateurs (1, 2, 3 ...) électriques en une tension (Ua),
- au moins une première entrée, qui est reliée à une sortie d'une source (6) de tension, qui fournit une tension (Ug) d'alimentation de base,
- au moins une deuxième entrée, qui est reliée à une sortie d'une unité (7) d'accumulation d'énergie, qui fournit une tension (Up) tampon dans le cas d'un défaut de la tension (Ug) de l'alimentation de base,
**caractérisée**
**en ce que** l'unité (5) d'alimentation en courant pour effectuer une opération réglée de mise en circuit des consommateurs (1, 2, 3 ...) électriques est constituée pour effectuer un procédé suivant l'une des revendications 1 à 6.

8. Unité (5) d'alimentation en courant suivant la revendication 7,
**caractérisée en ce que**
il y a au moins une première interface de communication et d'échange de données avec les consommateurs (1, 2, 3 ...) électriques par un premier (12) de communication et au moins une deuxième interface de communication et d'échange de données avec l'unité (7) d'accumulation d'énergie par un deuxième réseau (13) de communication.

9. Unité (5) d'alimentation en courant suivant l'une des revendications 7 et 8,
**caractérisée en ce que**
il est prévu un module de détermination d'un niveau de charge de l'unité (7) d'accumulation d'énergie et/ou du temps (t1) de charge.

10. Unité (5) d'alimentation en courant suivant l'une des revendications 7 à 9,
**caractérisée en ce que**
il y a au moins une autre interface de communication avec des serveurs extérieurs ou avec des systèmes de gestion ou **en ce que** l'on effectue cette communication par la première ou la deuxième interface.

11. Unité (5) d'alimentation de courant suivant l'une des revendications 7 à 10,
**caractérisée en ce que**
il y a des moyens pour effectuer de l'ingénierie, de la configuration et du paramétrage de l'unité (5).

12. Unité (5) d'alimentation de courant suivant l'une des revendications 7 à 11, **caractérisée en ce que** l'unité (7) d'accumulation d'énergie comprend un nombre quelconque de modules (7a, 7b) de batterie.

13. Installation (10) fonctionnant à l'électricité et comprenant une pluralité de consommateurs (1, 2, 3 ...) électriques,
qui comprend au moins une unité d'alimentation en courant suivant l'une des revendications 7 à 12.

14. Installation (10) fonctionnant à l'électricité suivant la revendication 13, dans laquelle l'unité (5) d'alimentation en courant et/ou les consommateurs (1, 2, 3,) électriques comprennent des modules logiciels et sont conformés de manière à pouvoir être paramétrés par un outil logiciel.

15. Programme d'ordinateur ayant des instructions de code de programme pouvant être réalisées par un ordinateur pour la mise en œuvre d'un procédé suivant l'une des revendications 1 à 6, lorsque le programme d'ordinateur est réalisé sur une unité (5) d'alimentation en courant suivant l'une des revendications 7 à 12.
